Europäisches Patentamt

European Patent Office

Office européen des brevets

(11) Numéro de publication: **0 079 811**
**A1**

## (12) DEMANDE DE BREVET EUROPEEN

(21) Numéro de dépôt: 82401948.3

(22) Date de dépôt: 22.10.82

(51) Int. Cl.³: **D 21 D 5/16**

(30) Priorité: 18.11.81 FR 8121571

(43) Date de publication de la demande:
25.05.83 Bulletin 83/21

(84) Etats contractants désignés:
DE GB IT SE

(71) Demandeur: E. + M. Lamort Société Anonyme dite:
rue de la Fontaine Ludot
F-51300 Vitry-le-François(FR)

(72) Inventeur: Lamort, Jean-Pierre
Saint Lumier-en-Champagne
F-51300 Vitry le François(FR)

(74) Mandataire: Loyer, Yves et al,
CABINET PIERRE LOYER 18, rue de Mogador
F-75009 Paris(FR)

(54) Perfectionnements aux épurateurs de pâte à papier et à leurs tamis.

(57) Dispositif pour l'épuration de suspensions liquides de fibres telles que des pâtes à papier. Il comporte un tamis (4) muni de rainures (1) ayant une paroi radiale (2) sensiblement perpendiculaire à la composante de vitesse du liquide qui est tangentielle au tamis, les trous (3) du tamis (4) étant perforés au fond de ladite rainure (1) le long de ladite paroi radiale, l'ouverture de la rainure ayant une largeur plusieurs fois supérieure au diamètre des trous.

Fig.1

EP 0 079 811 A1

1

<u>Perfectionnements aux épurateurs de pâte à papier et à leurs tamis.</u>

La présente invention se rapporte aux appareils d'épuration de pâte à papier comportant une cuve fermée, un tamis cylindrique à l'intérieur de cette cuve, définissant deux chambres, l'une dans laquelle arrive la pâte à épurer et l'autre comprenant la sortie de bonne pâte.

Nombre de ces appareils comporte en outre des pales ou ailettes qui tournent à proximité du tamis et assurent des pulsations de nettoyage de ce dernier.

Ces pales tendent également à entretenir ou augmenter la rotation du liquide dans l'appareil et à créer ou maintenir ainsi une composante de vitesse du liquide qui est tangentielle à la surface du tamis.

Pour améliorer le fonctionnement de tels appareils, il a été proposé par la demanderesse, dans son brevet français n° 1.546.515 déposé le 14 juin 1967 de munir le tamis de fentes longitudinales dissymétriques comportant une face disposée radialement, face à la composante de vitesse tangentielle du liquide, et une face inclinée dans le sens inverse de la rotation des pales. Il est précisé dans ce brevet que l'on a pu obtenir ainsi une vitesse de reflux à travers les fentes augmentée de 50 % ce qui est très avantageux pour le nettoyage du tamis.

Un autre effet de ces fentes dissymétriques est de permettre d'obtenir, dans la chambre externe au tamis, une circulation de sens inverse de la circulation obtenue dans la chambre interne lorsque l'on emploie un tambour cylindrique fermé parallèle au tamis et portant les pales. Des appareils faisant application de cette disposition sont décrits au brevets français n° 77.35151 déposé le 23 novembre 1977 et n° 79.17562 déposé le 6 juillet 1979 auxquels on se reporterra pour une appréciation plus détaillée du domaine auquel se rapporte la présente invention.

Cependant, les avantages de cette disposition ne peuvent être obtenus qu'avec des fentes parallèles à l'axe du tamis et non avec des trous. En effet, même si les trous sont évasés dissymétriquement en direction des pales, il se produit des réflexions du liquide dans tous les sens et le résultat recherché n'est pas atteint.

L'invention a pour objet un mode de réalisation de tamis à trous qui permet de résoudre cette difficulté.

Conformément à l'invention, le tamis est muni de rainures parallèles à l'axe du tamis, lesdites rainures ayant au moins une paroi radiale, c'est-à-dire approximativement perpendiculaire à la paroi du tamis, selon un plan passant approximativement par l'axe du tamis, et les trous du tamis sont perforés au fond de ladite rainure, le long de ladite paroi radiale, l'ouverture de la rainure ayant une largeur plusieurs fois supérieure au diamètre des trous.

La largeur d'ouverture des rainures, leur profondeur et l'épaisseur résiduelle du tamis dans laquelle sont perforés les trous seront de préférence tels que des filets de liquides orientés à 30° - 45° par rapport à la paroi radiale, puissent traverser directement les trous après réflexion.

La section droite de la rainure, mise à part sa face radiale, aura une forme quelconque, et de préférence une forme générale en V, de sorte que la rainure comporte une face radiale et une face évasée en biais par rapport à la direction radiale.

Chaque rainure peut comporter un seul trou. Mais il est préféré de réaliser des rainures d'extension longitudinale suffisante pour permettre la réalisation de plusieurs trous alignés côte à côte au fond de la rainure.

L'invention est illustrée par le dessin annexé sur lequel, on a représenté, à titre d'exemple :

Figure 1, une vue en plan d'une perforation selon l'invention ;

Figure 2, une vue en coupe selon A-A de la figure 1 ;

Figure 3, une vue développée partielle de tamis selon l'invention ;

Figure 4, un schéma de fonctionnement d'épurateur muni des dispositions de l'invention ;

Figures 5 à 7, des variantes de la figure 2 ;

Figure 8, une variante de la figure 4.

Figure 9, une variante à tamis en forme de disque.

En se reportant à ces figures, on voit que les perforations de tamis selon l'invention sont formées par la combinaison de rainures 1, parallèles à l'axe du tamis, ayant une paroi radiale 2 et les trous 3 du tamis sont perforés au fond des rainures 1 le long de la paroi 2.

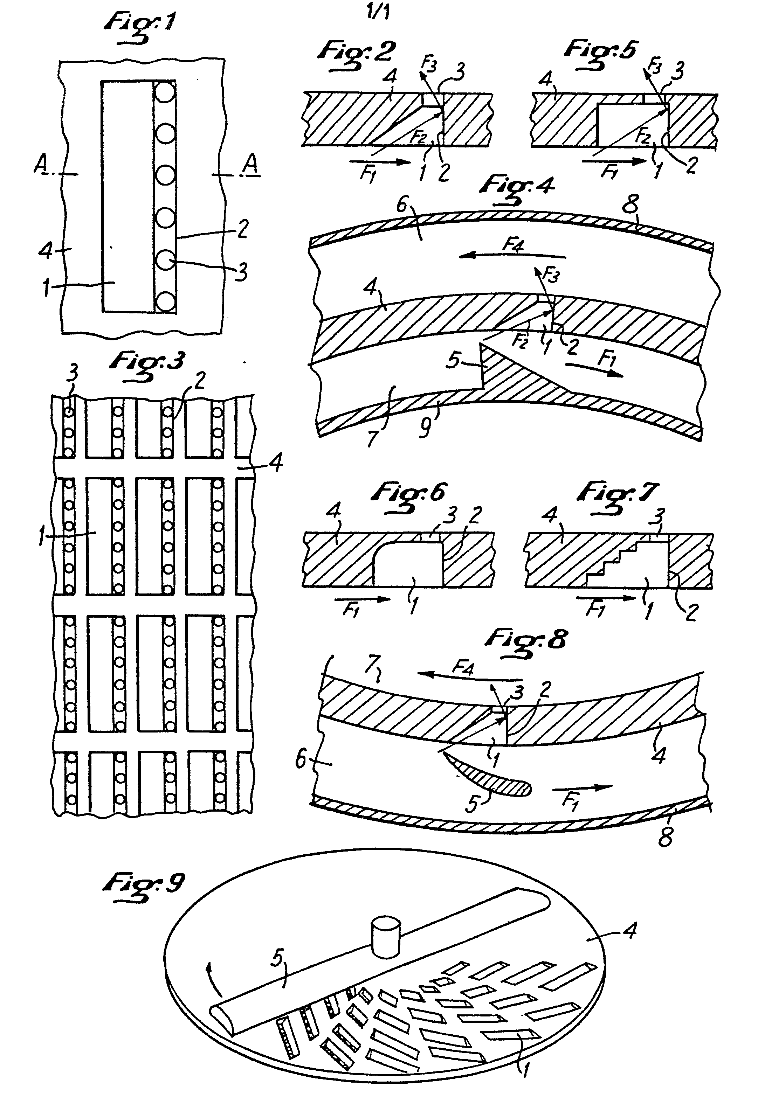

De telles perforations sont en général destinées à des tamis cylindriques 4 (figure 3) dans lesquels une ou plusieurs pales 5 se meuvent à proximité de la surface du tamis et impriment au liquide à la fois des pulsations perpendiculaires au tamis et un mouvement de rotation tangentiel à la surface du tamis, selon la flèche $F_1$.

Dans de tels appareils, le tamis 4 sépare une chambre externe 6 d'une chambre interne 7. La paroi de la cuve est représentée en 8 et dans l'exemple représenté les pales 5 sont portées par un tambour 9. Mais il va de soi que :

- les pales 5 peuvent être portées par des bras,

- les pales 5 peuvent être externes au tamis et les rainures être placées sur la paroi externe du tamis 4 (figure 8).

D'autre part, du point de vue de l'invention, ce qui importe est que la paroi 2 soit perpendiculaire à la composante de vitesse du liquide qui est tangentielle à la surface du filtre.

Dans le cas d'un tamis cylindrique, cette composante tangentielle est perpendiculaire à l'axe du tamis, ou peu inclinée sur celui-ci.

Mais on peut également réaliser un tamis plan, par exemple en forme de disque balayé par des pales 5 passant à proximité du tamis. Dans ce cas, les rainures seront disposées comme représenté figure 9, c'est-à-dire de façon que leur paroi 2 soit approximativement perpendiculaire à la composante tangentielle de la vitesse du liquide.

Le terme "paroi radiale" inclut donc au titre d'équivalent, une paroi orientée selon l'axe d'un tamis cylindrique ou peu inclinée sur celui-ci et une paroi approximativement perpendiculaire à la composante de la vitesse de liquide qui est tangentielle au tamis.

L'épaisseur résiduelle du tamis 4 dans laquelle sont forés les trous 3, le diamètre de ceux-ci, la largeur d'ouverture de la rainure 1 et sa profondeur doivent être déterminés corrélativement. En effet, le but de l'invention est de permettre un fonctionnement dans lequel les filets de liquide qui entrent dans la rainure 1 selon la flèche $F_2$, à

30° - 45° environ par rapport à la paroi radiale, se réfléchissent sur la paroi radiale 2 pour traverser le trou 3 selon la flèche F$_3$.

Pour cela la largeur de l'ouverture devra être plusieurs fois supérieure au diamètre des trous 3, de l'ordre de 3 à 5 fois supérieure, et la profondeur de la rainure devra être, de préférence, plusieurs fois supérieure à l'épaisseur résiduelle du tamis 4 dans laquelle sont forés les trous 3 (2 à 5 fois supérieure ).

Les rainures 1 sont de préférence creusées selon la figure 2, c'est-à-dire avec une section droite en forme de V. Mais, pour plus de facilité de fabrication, on peut également adopter des sections droites représentées figures 5, 6 ou 7.

On peut envisager de réaliser un trou 3 par rainure 1 ou une rainure 1 par trou 3. Mais il est préféré de réaliser des rainures ayant une extension parallèle à la paroi radiale 2 plus grande que leur ouverture, plusieurs trous 3 étant forés côte à côte au fond de chaque rainure (figure 1) ; la paroi d'un tamis selon l'invention prend alors l'allure représentée figure 3 lorsqu'il s'agit d'un tamis 4 cylindrique.

A titre d'exemple, pour des trous de 1,6 mm de diamètre, un tamis de 4 mm d'épaisseur, une rainure 1 pourra avoir 4 mm d'ouverture et une profondeur de 3,5 mm.

Au fond des rainures les entraxes des trous 3 pourront être de 2 mm.

Deux rainures successives pourront être séparées de 0,5 mm.

Les perforations ainsi réalisées permettent un tamisage plus efficace que de simples trous de même diamètre : tout en retenant les impuretés de diamètre ou dimensions supérieures, ils laissent passer plus facilement les particules de

6 **0079811**

diamètre inférieur à celui des trous ; en effet, la composante de vitesse tangentielle se trouve brisée par les parois 2, il est possible d'obtenir une circulation à l'extérieur du tamis en sens contraire de la circulation interne, et la mince épaisseur de tamis dans laquelle se trouvent perforés les trous 3 facilite le passage des particules admises, tandis que les refus sont dégagés des rainures 1 par l'effet de pulsation des pales 5 avec une vitesse de refoulement nettement supérieure.

La combinaison en succession de deux tamis à perforations dissymétriques, l'un étant un tamis à fentes selon les brevets précités et l'autre étant un tamis à trous réalisé selon la présente invention, permet de réaliser des épurations de rendements et qualités supérieurs.

1

**0079811**

<u>Revendications de brevet.</u>

1. Dispositif pour l'épuration de suspensions liquides de fibres telles que des pâtes à papier, caractérisé en ce qu'il comporte un tamis (4) muni de rainures (1) ayant une paroi radiale (2) sensiblement perpendiculaire à la composante de vitesse du liquide qui est tangentielle au tamis, les trous (3) du tamis (4) étant perforés au fond de ladite rainure (1) le long de ladite paroi radiale l'ouverture de la rainure ayant une largeur plusieurs fois supérieure au diamètre des trous.

2. Dispositif selon la revendication 1, caractérisé en ce que la largeur d'ouverture des rainures, leur profondeur et l'épaisseur résiduelle du tamis dans laquelle sont perforés des trous sont tels que des filets de liquide orientés à 30° - 45° par rapport à la paroi radiale, traversant directement les trous après réflexion.

3. Dispositif selon l'une quelconque des revendications précédentes, caractérisé en ce que la profondeur des rainures (1) est deux à cinq fois plus grande que l'épaisseur résiduelle dans laquelle sont perforés les trous.

4. Dispositif selon l'une quelconque des revendications précédentes, caractérisé en ce que la largeur d'ouverture des rainures est trois à cinq fois plus grande que la diamètre des trous.

5. Dispositif selon l'une quelconque des revendications précédentes, caractérisé en ce que chaque rainure a une extension longitudinale parallèle à la paroi radiale plus grande que la largeur de son ouverture et comporte plusieurs trous perforés côte à côte.

6. Dispositif selon l'une quelconque des revendications précédentes, caractérisé en ce que les rainures ont une section en forme de V.

7. Tamis cylindrique d'épurateur muni de perforations en forme de trous (3) disposés au fond de rainures (1) sensiblement parallèles à l'axe du tamis, comportant une paroi radiale (2) le long de laquelle sont forés lesdits trous (3), l'ouverture des rainures étant plusieurs fois plus grande que le diamètre des trous.

8. Tamis selon la revendication 5 et l'une quelconque des revendications 2 à 4.

*Fig.1*

*Fig.2*

*Fig.5*

*Fig.4*

*Fig.3*

*Fig.6*

*Fig.7*

*Fig.8*

*Fig.9*

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | GB-A-1 242 086  (E. & M. LAMORT) *En entier* | 1 | B 21 D  5/16 |
| A | US-A-4 276 159  (LEHMAN) | | |
| A | US-A-2 301 514  (BREWSTER) | | |

DOMAINES TECHNIQUES RECHERCHES (Int. Cl. ³)

D 21 D
B 01 D

Le présent rapport de recherche a été établi pour toutes les revendications

| Lieu de la recherche | Date d'achèvement de la recherche | Examinateur |
|---|---|---|
| LA HAYE | 28-02-1983 | DE RIJCK F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82